# EUROPÄISCHE PATENTSCHRIFT

(11) **EP 3 273 224 B1**
(45) Veröffentlichungstag und Bekanntmachung des Hinweises auf die Patenterteilung: **13.11.2019**
(21) Anmeldenummer: 16180874.6
(22) Anmeldetag: 22.07.2016
(51) Int. Cl.: G01N 21/64, G01N 21/76

(54) **VORRICHTUNG ZUR ERMITTLUNG OPTISCHER EIGENSCHAFTEN VON PROBEN IN UNTERSCHIEDLICHEN BETRIEBSMODI**
DEVICE FOR DETERMINING THE OPTICAL PROPERTIES OF SAMPLES IN DIFFERENT OPERATING MODES
DISPOSITIF DE DETERMINATION DE CARACTERISTIQUES OPTIQUES D'ECHANTILLONS DANS DES MODES DE FONCTIONNEMENT DIFFERENTS

(43) Veröffentlichungstag der Anmeldung: 24.01.2018
(73) Patentinhaber: Berthold Technologies GmbH & Co. KG, 75323 Bad Wildbad (DE)
(72) Erfinder: Klaiber, Norbert, 75337 Enzklösterle (DE)
(74) Vertreter: Patentanwälte Ruff, Wilhelm, Beier, Dauster & Partner mbB

(56) Entgegenhaltungen:
- WO-A1-2012/095312
- US-A1- 2005 122 521
- US-B1- 6 236 456

## Beschreibung

### ANWENDUNGSGEBIET UND STAND DER TECHNIK

Die Erfindung betrifft eine Vorrichtung zur Ermittlung optischer Eigenschaften von Proben in unterschiedlichen Betriebsmodi gemäß dem Oberbegriff von Anspruch 1. Eine derartige Vorrichtung ist in der WO 2012/095312 A beschrieben.

Verfahren der Fluoreszenzspektroskopie gehören zu den wichtigsten Untersuchungsmethoden in der biochemischen und pharmakologischen Forschung. Zur Messwerterfassung werden Vorrichtungen zur Ermittlung von optischen Eigenschaften von Proben eingesetzt. Diese können als reine Fluorometer ausschließlich für Fluoreszenzmessungen ausgelegt sein oder als Multi-Technologie-Geräte, z.B. sogenannte Multi-Label-Reader (MLR) oder Multi-Mode-Reader, die zusätzlich zu Fluoreszenzmessungen auch andere Messmethoden ermöglichen, z.B. Lumineszenzmessungen, Absorptionsmessungen etc.

Bei der Messung der Fluoreszenz wird über einen Anregungspfad die Probe mit Licht (Anregungslicht, Excitationslicht) einer bestimmten Anregungswellenlänge beaufschlagt und dadurch Fluoreszenzlicht erzeugt. Das aus der Probe emittierte Fluoreszenzlicht (Emissionslicht), welches gegenüber dem Anregungslicht normalerweise zu längeren Wellenlängen (niedrigeren Energien) verschoben ist, wird in einem Emissionspfad einem photosensitiven Detektor zugeleitet und die resultierenden Intensitäten gemessen.

Die Art der untersuchten Proben ist hierbei äußerst vielfältig und kann von homogenen Lösungen über Suspensionen und Dispersionen bis zu immobilisierten Zellen reichen.

Bei Fluoreszenzproben ist es üblich, das Emissionslicht an der Probenoberfläche zu sammeln und nach Durchlaufen einer spektralen Filterung, z.B. durch optische Filter oder Monochromatoren hindurch, zum photoempfindlichen Detektor zu führen. Eine derartige Erfassung von Emissionslicht von der Oberseite der Probe bzw. des Probenbehälters wird hier als Betriebsmodus "Messung von oben" oder "Top-Messung" bezeichnet.

Unter anderem bei Zellmessungen ist es dagegen häufig sinnvoll, Probenbehälter mit einem transparenten Boden zu verwenden und das Emissionslicht der sich am Boden des Probenbehälters befindlichen Zellen durch den Behälterboden hindurch aufzunehmen und von der Unterseite der Probe über ein wellenlängenselektives Element, z.B. Bandpassfilter, zu dem Detektor zu führen. Eine derartige Erfassung von Emissionslicht von der Unterseite der Probe bzw. des Probenbehälters wird hier als Betriebsmodus "Messung von unten" oder "Bottom-Messung" bezeichnet.

Empfindliche Fluoreszenzbestimmungen erfordern eine starke Blockung des Anregungslichtes gegenüber dem schwachen Emissionslicht aus der Probe sowie eine Eingrenzung des zu detektierenden Emissionslichts auf einen gewünschten Spektralbereich im Emissionspfad.

Viele Vorrichtungen arbeiten hierzu mit dedizierten Interferenzbandpassfiltern sowohl im Anregungspfad als auch im Emissionspfad. Hiermit können hohe Empfindlichkeiten aufgrund der hohen Transmissivität der Filter im Passbereich bei gleichzeitig guter Blockung außerhalb dieses Bereichs erreicht werden. Alternativ können Monochromatoren zum Einsatz kommen, die eine kontinuierliche Verstellung des Passbereichs ermöglichen. Bekannte Bauformen hierfür sind Dispersionsmonochromatoren, die optische Gitter oder Prismen zur spektralen Aufspaltung von Licht einsetzen, oder Kombinationen variabler Kantenfilter, die eine ortsabhängige spektrale Transmission aufweisen (siehe z.B. DE 10 2013 224 463 A1). Beim Einsatz schmalbandiger Lichtquellen wie z.B. Laser, Laserdioden oder LEDs, kann unter Umständen auf eine zusätzliche spektrale Filterung im Anregungspfad verzichtet werden.

Die EP 1 279 946 A2 offenbart eine Vorrichtung zur wahlweisen Messung von Lumineszenz- und/oder Fluoreszenzstrahlung aus Probenbehältern über mindestens zwei Messlichtpfade mittels mindestens zwei Messeinrichtungen mit mindestens einer Strahlenquelle und mindestens einem Detektor. Die Vorrichtung weist einen einzigen, in einer Horizontalebene dreh- oder verschiebbar gehaltenen Emissionsfilterträger auf, der mindestens zwei Öffnungen zur bedarfsweisen Aufnahme von jeweils einem Emissionsfilter aufweist. Die Probenbehälter sind auf einer gemeinsamen Probenebene unterhalb der Horizontalebene und parallel zu dieser in ihre Messposition verschiebbar. Die Messeinrichtungen sind derart im Wesentlichen zwischen den beiden Ebenen angeordnet, dass jeder ihrer zugeordneten Messlichtpfade durch jede durch Drehung oder Verschiebung des Filterträgers wählbare Öffnung des Filterträgers zum Detektor verlaufen kann. Die Vorrichtung kann u.a. wahlweise für eine Fluoreszenzmessung von oben oder von unten genutzt werden. Bei einer Ausführungsform mit einem Detektor und einer Lichtquelle für beide Arten von Messungen werden zum Wechsel zwischen diesen Betriebsmodi sowohl der Detektor als auch die Lichtquelle verlagert.

Weitere Vorrichtungen zur Ermittlung optischer Eigenschaften von Proben in unterschiedlichen Betriebsmodi werden in der US 6,236,456 B1 und in der US 2005/122521 A beschrieben.

### AUFGABE UND LÖSUNG

Es ist eine Aufgabe der Erfindung, eine gattungsgemäße Vorrichtung zur Ermittlung optischer Eigenschaften von Proben bereitzustellen, die für Messungen von oben und für Messungen von unten geeignet ist, flexibel in unterschiedlichen Betriebsmodi nutzbar ist und sich durch einen kompakten Aufbau auszeichnet, so dass wenig Aufstellfläche benötigt wird.

Zur Lösung dieser Aufgabe stellt die Erfindung eine Vorrichtung zur Ermittlung optischer Eigenschaften von Proben in unterschiedlichen Betriebsmodi mit den Merkmalen von Anspruch 1 bereit. Vorteilhafte Weiterbildungen sind in den abhängigen Ansprüchen angegeben. Der Wortlaut sämtlicher Ansprüche wird durch Bezugnahme zum Inhalt der Beschreibung gemacht.

Die Vorrichtung kann in mindestens zwei unterschiedlichen Betriebsmodi betrieben werden. In einem ersten Betriebsmodus ist die Vorrichtung für eine Fluoreszenzmessung konfiguriert, bei der Anregungslicht von der Oberseite der Probe bzw. des Probenbehälters in die Probe eingestrahlt wird und Emissionslicht von der Oberseite der Probe empfangen und zum Detektor geführt wird. Der erste Betriebsmodus wird auch als "Messung von oben" bzw. "Top-Messung" bezeichnet. In einem zweiten Betriebsmodus, der auch als "Messung von unten" oder "Bottom-Messung" bezeichnet wird, wird ein Probenbehälter mit einem transparenten Boden verwendet. Anregungslicht geeigneter Wellenlänge wird von unten durch den Behälterboden hindurch in die Probe eingestrahlt und Emissionslicht wird von der Unterseite der Probe zum Detektor geführt.

Um zumindest diese beiden Betriebsmodi zu ermöglichen, hat die Vorrichtung mindestens eine (monochromatische oder polychromatische) Lichtquelle und mindestens einen photosensitiven Detektor. Es ist ein erster Anregungspfad vorgesehen, der zur Übertragung von Licht der Lichtquelle als Anregungslicht von oben in eine erste Messposition dient. In der ersten Messposition kann ein Probenbehälter mit einer Probe angeordnet sein oder, vor der Durchführung einer Messung, angeordnet werden. Ein erster Emissionspfad ist dafür ausgelegt, durch die Probe emittiertes Emissionslicht von der Oberseite der Probe zu dem Detektor zu übertragen. Oberhalb der ersten Messposition ist eine selektive Strahlumlenkeinrichtung angeordnet, die dazu dient, den ersten Anregungspfad vom ersten Emissionspfad zu separieren. Die Strahlumlenkeinrichtung kann so eingerichtet sein, dass von der Lichtquelle kommendes Anregungslicht in Richtung der ersten Messposition umgelenkt und Emissionslicht des ersten Emissionspfads von der ersten Messposition in Richtung des Detektors durchgelassen wird. Es ist auch möglich, die Strahlumlenkeinrichtung so auszulegen, dass von der Lichtquelle kommendes Anregungslicht ohne Umlenkung zur ersten Messposition durchgelassen wird und von der ersten Messposition kommendes Emissionslicht des ersten Emissionspfads in Richtung des Detektors umgelenkt wird. Die Strahlumlenkeinrichtung kann beispielsweise einen geometrischen Strahlteiler oder einen physikalischen Strahlteiler enthalten.

Weiterhin ist ein zweiter Anregungspfad vorgesehen, der zur Übertragung von spektralen Anteilen von Licht der Lichtquelle als Anregungslicht von unten in eine zweite Messposition dient. In der zweiten Messposition kann ein Probenbehälter mit einer Probe angeordnet sein oder werden, um eine Messung von unten durchzuführen. Es ist ein zweiter Emissionspfad ausgebildet, der dafür ausgelegt ist, durch die Probe emittiertes Emissionslicht von der Unterseite der Probe zu dem Detektor zu übertragen.

Die Vorrichtung kann umgestellt werden, um wahlweise im ersten Betriebsmodus oder im zweiten Betriebsmodus zu arbeiten. Hierfür sind Einrichtungen zur Umschaltung zwischen dem ersten Betriebsmodus und dem zweiten Betriebsmodus vorgesehen, wobei im ersten Betriebsmodus der erste Anregungspfad und der erste Emissionspfad und im zweiten Betriebsmodus der zweite Anregungspfad und der zweite Emissionspfad nutzbar sind. Bei vielen Ausführungsformen können weitere Betriebsmodi eingestellt werden, beispielsweise um eine Lumineszenzmessung oder eine Absorptionsmessung durchzuführen.

Eine Besonderheit der Vorrichtung besteht darin, dass der zweite Emissionspfad einen ersten Teilpfad aufweist, der von einem unterhalb der zweiten Messposition angeordneten Eintrittskopf für von der Unterseite der Probe emittiertes Emissionslicht unter Umgehung der ersten Messposition zu einer Einkoppeleinrichtung zur Einkopplung von Emissionslicht in den ersten Emissionspfad führt.

Diese Ausgestaltung bietet zahlreiche Vorteile. Zwischen der Einkoppeleinrichtung und dem Detektor haben der erste Emissionspfad und der zweite Emissionspfad den gleichen Verlauf. Da detektorseitig der erste und der zweite Emissionspfad zusammenfallen, kann im ersten Betriebsmodus und im zweiten Betriebsmodus derselbe Detektor genutzt werden, der beim Wechsel zwischen den Betriebsmodi nicht bewegt werden muss. Der Detektor kann somit in einer Detektorposition stationär montiert sein. Manche Ausführungsformen zeichnen sich dadurch aus, dass der Detektor ein stationärer Detektor ist, der sich im ersten und im zweiten Betriebsmodus in derselben Detektorposition befindet. Einrichtungen zum Bewegen des Detektors zwischen unterschiedlichen Detektorpositionen können entfallen.

Weiterhin erlaubt diese Konstruktion, dass sich während einer Messung im zweiten Betriebsmodus (Messung von unten) ein Probenbehälter in der ersten Messposition befindet, welche für die Messung von oben genutzt werden kann. Dies ist möglich, weil der erste Teilpfad nicht durch die erste Messposition führt, sondern diese umgeht bzw. an der ersten Messposition vorbeiführt.

Die Konstruktion erlaubt es auch, an einer festen Detektorposition unterhalb der ersten Messposition einen weiteren photosensitiven Detektor stationär anzubringen. Dieser kann für eine Absorptionsmessung genutzt werden, wenn in der ersten Messposition ein Probenbehälter mit einem transparenten Boden angeordnet wird und Anregungslicht für die Absorptionsmessung von oben, insbesondere über den ersten Anregungspfad, auf die Probe eingestrahlt wird. Dies Maßnahme kann alternativ oder zusätzlich zu einem stationären Detektor am Endes des ersten und zweiten Emissionspfades vorgesehen sein.

Durch die beanspruchte Erfindung ist es auch möglich, in einem gegeben Lichtpfad, der für die Messung von oben geeignet ist, sowohl für Anregung als auch für Emission zusätzliche Lichtwege zur Verfügung zu stellen, die die Messung von unten ermöglichen, ohne den Lichtpfad dahingehend zu verändern, dass Lichtquellen oder Detektoren verfahren werden müssen. Hierdurch wird ein äußerst kompakter Aufbau möglich, durch den äußerst wenig Laborfläche benötigt wird.

Die erste Messposition und die zweite Messposition können räumlich getrennt sein. Es ist auch möglich, dass sie zusammenfallen, so dass die erste und die zweite Messposition die gleiche Position ist. Dann kann sich ein Probengefäß für die Messung von oben und für die Messung von unten an der gleichen Messposition befinden.

Im ersten und zweiten Betriebsmodus werden unterschiedliche Emissionspfade bzw. Emissionswege zur Führung des Emissionslichts benötigt. Erfindungsgemäß ist eine zwischen mehreren Betriebsstellungen umschaltbare Emissionsfilterträgereinrichtung zur selektiven Filterung von Emissionslicht vor Eintritt in den Detektor vorgesehen, wobei die Emissionsfilterträgereinrichtung als umschaltbare Einkoppeleinrichtung zur wahlweisen Einkopplung von Emissionslicht aus dem ersten Teilpfad in den ersten Emissionspfad ausgebildet ist. Die Einkopplung kann durch Umschalten der Einkoppeleinrichtung wahlweise zugelassen oder unterbunden werden. Eine umschaltbare Emissionsfilterträgereinrichtung kann beispielsweise als drehbares Filterrad oder als linear verschiebbare Filterschieber ausgestaltet sein und ist in den meisten hier betrachteten Vorrichtungen ohnehin vorhanden, um dazu beizutragen, detektorseitig jegliche Anteile von Anregungslicht zu blocken und nur das Emissionslicht aus dem erwarteten Spektralbereich zum Detektor durchzulassen. Wenn eine umschaltbare Emissionsfilterträgereinrichtung als umschaltbare Einkoppeleinrichtung verwendet wird, kann auf zusätzliche optische Einrichtungen für diesen Zweck verzichtet werden, wodurch Kosten eingespart werden können und eine einfachere robuste Konstruktion sichergestellt werden kann. Bei dieser Ausgestaltung bekommt ein meist ohnehin vorhandenes Element (umschaltbare Emissionsfilterträgereinrichtung) eine weitere Funktion, nämlich die Funktion einer umschaltbaren optischen Weiche, welche im zweiten Betriebsmodus Emissionslicht aus dem ersten Teilpfad empfängt und in Richtung Detektor leitet. Diese Funktionalität kann somit erreicht werden, ohne dass zusätzliche optische Weichen eingesetzt werden müssen. Eventuelle funktionale Anfälligkeiten bezüglich Betriebssicherheit durch gesonderte motorisch betriebene Weichenstellungen und Positionierungenauigkeiten in optischen Stellwerken können minimiert bzw. eliminiert werden.

Die vorteilhafte Funktionalität kann dadurch realisiert werden, dass die Emissionsfilterträgereinrichtung einen Einkoppelabschnitt zur Umlenkung von Emissionslicht aus dem ersten Teilpfad in Richtung des Detektors aufweist, wobei die Emissionsfilterträgereinrichtung zur Einstellung des zweiten Betriebsmodus in eine Einkoppelstellung bewegbar ist, in welcher Emissionslicht aus dem ersten Teilpfad über den Einkoppelabschnitt in Richtung des Detektors umlenkbar ist. Im Einkoppelabschnitt können hierzu Strahlumlenkelemente, beispielsweise in Form schräggestellter Spiegel (einer oder mehrere) oder dergleichen vorgesehen sein.

Im Einkoppelabschnitt können streulichtreduzierende Elemente (eines oder mehrere) vorgesehen sein, um sicherzustellen, dass kein oder möglichst wenig Streulicht aus dem ersten Teilpfad direkt (unter Umgehung eines Umlenkelements (z.B. Spiegel)) oder indirekt zum Detektor gelangt. Alternativ oder zusätzlich können im Einkoppelabschnitt lichtleitende Elemente (eines oder mehrere) vorgesehen sein, die dafür konfiguriert sind, sicherzustellen, dass das zu detektierende Licht (Nutzlicht) aus dem ersten Teilpfad im Wesentlichen nur über das Umlenkelement (z.B. Spiegel) und nicht unter Umgehung des Umlenkelements zum Detektor gelangt. Dadurch kann ggf. auch ein günstiger, möglichst senkrechter Durchtritt des Lichts durch ein Emissionsfilter sichergestellt werden.

Im ersten Betriebsmodus, also bei der Messung von oben, sollte möglichst kein Licht durch den ersten Teilpfad in Richtung des Detektors gelangen. Daher ist vorzugsweise vorgesehen, ein verstellbares Verschlusselement vorzusehen, welches im ersten Betriebsmodus einen Lichtaustritt aus dem ersten Teilpfad unterbindet, während im zweiten Betriebsmodus ein Lichtaustritt ermöglicht wird. Vorzugsweise ist hierzu die Emissionsfilterträgereinrichtung als verstellbares Verschlusselement ausgebildet, welches einen Lichtaustritt von Emissionslicht aus dem ersten Teilpfad unterbindet, wenn sich die Emissionsfilterträgereinrichtung nicht in der Einkoppelstellung befindet. In der Einkoppelstellung ist der Verschluss dann offen. Somit kann durch Bewegung der Emissionsfilterträgereinrichtung gleichzeitig auch das Verschlusselement zwischen einer Schließstellung (im ersten Betriebsmodus) und einer Durchlassstellung (im zweiten Betriebsmodus) verstellt bzw. umgeschaltet werden. Auf ebenfalls mögliche besondere Verschlusselemente, zum Beispiel am Eingang des ersten Teilpfads, kann somit verzichtet werden.

Alternativ oder zusätzlich kann eine solche Verschlussfunktion auch für den zweiten Betriebsmodus vorgesehen sein. Die Emissionsfilterträgereinrichtung kann als verstellbares Verschlusselement ausgebildet, welches einen Durchtritt von Emissionslicht aus ersten Emissionspfad in Richtung des Detektors unterbindet, wenn sich die Emissionsfilterträgereinrichtung in der Einkoppelstellung (für die Messung von unten) befindet. Für die Messung von oben ist der Verschluss dann offen. Somit kann durch Bewegung der Emissionsfilterträgereinrichtung gleichzeitig auch das Verschlusselement zwischen einer Schließstellung (im zweiten Betriebsmodus) und einer Durchlassstellung (im ersten Betriebsmodus) verstellt bzw. umgeschaltet werden.

Die umschaltbare Emissionsfilterträgereinrichtung kann in Form eines drehbaren Filterrads ausgestaltet sein. Es kann jedoch vorteilhaft sein, wenn die umschaltbare Emissionsfilterträgereinrichtung als linear verschiebbare Schieber ausgebildet ist. Dadurch wird die Umschaltung zwischen den Betriebsmodi für einen Bediener besonders einfach. Außerdem kann bei Nutzung eines Schiebers besonders wirkungsvoll sichergestellt werden, dass während der gesamten Umstellung kein Licht in den Detektor fällt, so dass auf einen gesonderten Verschluss zum Schutz des Detektors vor unerwünschtem Lichteinfall verzichtet werden kann. Weiterhin bietet der linear bewegliche Filterschieber für den Benutzer den Vorteil, besonders einfach durch eine sich im Gerätegehäuse befindliche verschließbare Öffnung austauschbar zu sein.

Um sicherzustellen, dass das in der Regel relativ schwache Emissionslicht der Von-unten-Messung (zweiter Betriebsmodus) ohne vermeidbare Beeinträchtigung bis zum Detektor gelangt, ist vorzugsweise vorgesehen, dass die Einkoppeleinrichtung unmittelbar vor dem Detektor angeordnet ist in dem Sinne, dass zwischen der Einkoppeleinrichtung und dem Detektor kein strahlveränderndes optisches Element, wie beispielsweise eine Linse oder ein Umlenkspiegel, liegt. Ein Schutzfenster kann vorgesehen sein und ist kein strahlveränderndes optisches Element in diesem Sinne. Diese Bedingung kann insbesondere erfüllt werden, wenn die umschaltbare Emissionsfilterträgereinrichtung als umschaltbare Einkoppeleinrichtung verwendet wird, da auch Emissionsfilter üblicherweise unmittelbar vor dem Detektor angeordnet sind.

Am probenseitigen Ende des ersten Teilpfads ist ein Eintrittskopf vorgesehen, um das von der Unterseite der Probe emittierte Emissionslicht möglichst verlustarm in den ersten Teilpfad einzukoppeln. Bei manchen Ausführungsformen weist der Eintrittskopf ein Faserbündel mit einer Vielzahl von Lichtleitfasern mit Lichteintrittsenden auf, die ringförmig um eine Mittelachse des Eintrittskopfs angeordnet sind, wobei die Lichteintrittsenden gegenüber der Mittelachse derart geneigt sind, dass ein Aperturwinkel der Lichtleitfasern Emissionslicht im Wesentlichen nur aus einem emittierenden Durchmesser am Boden eines in der zweiten Messposition angeordneten Probenbehälters erfassen kann. Hierdurch kann eine unerwünschte Einkopplung von Licht von benachbarten Probenbehältern bei der Messung von unten weitestgehend unterdrückt werden.

Die Lichtleitfasern können an einer Austrittsseite des Eintrittskopfs zu einem Faserbündel zusammengefasst werden, welches als Emissionslichtleiter des ersten Teilpfads dient und bis in die Nähe der Einkoppeleinrichtung geführt sein kann. Vorzugsweise werden die Lichtleitfasern an der Austrittsseite des Eintrittskopfs gruppenweise zu zwei oder mehr jeweils eine Vielzahl von Lichtleitfasern umfassenden Faserbündeln zusammengefasst, die optisch voneinander getrennt zur Einkoppeleinrichtung führen. Bei gegebener Gesamtzahl von Lichtleitfasern haben die voneinander getrennten Faserbündel, beispielsweise zwei, drei oder vier Faserbündel, jeweils einen kleineren lichtführenden Querschnitt als ein einziges Faserbündel. Dadurch kann unter anderem eine eventuell erforderliche Fokussierung oder Parallelisierung des Lichts bei Eintritt in das Faserbündel oder bei Austritt aus dem Faserbündel vereinfacht werden. Gegebenenfalls ist auch eine bessere Nutzung des zur Verfügung stehenden Bauraums erzielbar.

Für die Zuführung von Anregungslicht ist vorzugsweise vorgesehen, dass an einem probenseitigen Ende des zweiten Anregungspfads unterhalb der zweiten Messposition ein Austrittskopf zum Leiten von Anregungslicht zur Unterseite eines in der zweiten Messposition angeordneten Probenbehälters angeordnet ist. Dieser Austrittskopf ist vorzugsweise stationär, also in Bezug auf einen Rahmen der Vorrichtung an einer festen Position angebracht, wodurch sich eine einfache und robuste Konstruktion ergibt. Der Austrittskopf kann am probenseitigen Ende eines Lichtleiters (Anregungslichtleiter) oder einer geometrischen Strahlführung (z.B. über Linsen, Spiegel, Kanäle etc.) angebracht sein und das Anregungslicht zur Einkopplung in den Boden eines Probengefäßes aufbereiten.

Bei manchen Ausführungsformen ist in dem Austrittskopf ein Strahlteiler zur Auskopplung eines Anteils des Anregungslichts zu einem dem Austrittskopf zugeordneten Referenzdetektor angeordnet. Hierdurch ist es möglich, in unmittelbarer Nähe bzw. unmittelbar vor der Einkopplung von Anregungslicht in die Probe eine Referenzmessung der Intensität des Anregungslichts durchzuführen, wodurch die Referenzierung mit besonders hoher Genauigkeit durchgeführt werden kann.

Der Eintrittskopf und der Austrittskopf können als separate Einheiten konstruiert und räumlich getrennt voneinander angeordnet sein. Vorzugsweise sind der Eintrittskopf und der Austrittskopf zu einem gemeinsamen Messkopf integriert, wodurch eine besonders platzsparende Lösung realisiert werden kann. Die Komponenten von Eintrittskopf und Austrittskopf können koaxial zueinander bzw. zu einer Messkopfachse angeordnet sein.

Für die Einkopplung von Anteilen des Lichts der Lichtquelle in den zweiten Anregungspfad gibt es unterschiedliche Möglichkeiten. Bei manchen Ausführungsformen ist eine umschaltbare Weicheneinrichtung vorgesehen, die zwischen der Lichtquelle und der Strahlumlenkeinrichtung angeordnet ist und zwischen mindestens zwei Betriebsstellungen umschaltbar ist, wobei in einer ersten Betriebsstellung Anregungslicht von der Lichtquelle entlang des ersten Anregungspfads zur Strahlumlenkeinrichtung geleitet und in einer zweiten Betriebsstellung Anregungslicht in den zweiten Anregungspfad eingekoppelt wird. Die Weicheneinrichtung gehört somit zu den Einrichtungen zur Umschaltung zwischen dem ersten Betriebsmodus und dem zweiten Betriebsmodus. Es ist möglich, die umschaltbare Weicheneinrichtung so auszugestalten, dass bei Bedarf auch noch unterschiedliche erste Anregungspfade wahlweise ausgewählt werden können. Bei einer Ausführungsform ist die Weicheneinrichtung zwischen mindestens drei Betriebsstellungen umschaltbar, wobei in einer dritten Betriebsstellung Anregungslicht durch einen dispersiven Monochromator hindurch zur Strahlumlenkeinrichtung geleitet wird.

Eine umschaltbare Weicheneinrichtung bringt unter anderem den Vorteil, dass die Vorrichtung nur eine Lichtquelle für den ersten und den zweiten Betriebsmodus aufzuweisen braucht, die stationär angeordnet sein kann.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
Fig. 1 zeigt schematisch eine Vorrichtung zur Ermittlung optischer Eigenschaften von Proben mittels Fluoreszenzspektroskopie und anderen optischen Untersuchungsmethoden gemäß einer Ausführungsform der Erfindung bei einer Fluoreszenzmessung von oben;
Fig. 2 zeigt die Vorrichtung aus Fig. 1 bei einer Fluoreszenzmessung von unten;
Fig. 3 zeigt einen Schnitt durch den Einkoppelabschnitt bei einer Ausführungsform;
Fig. 4 zeigt einen Schnitt durch den Einkoppelabschnitt bei einer alternativen Ausführungsform;
Fig. 5 zeigt eine Draufsicht auf die der Probe zugewandte Oberseite eines Messkopfs einer Ausführungsform;
Fig. 6 zeigt eine Variante des Messkopfs aus Fig. 5, modifiziert für eine Messung der Fluoreszenzpolarisation
Fig. 7 zeigt eine Darstellung einer Ausführungsform mit zwei Detektoren.

### DETAILLIERTE BESCHREIBUNG DER AUSFÜHRUNGSBEISPIELE

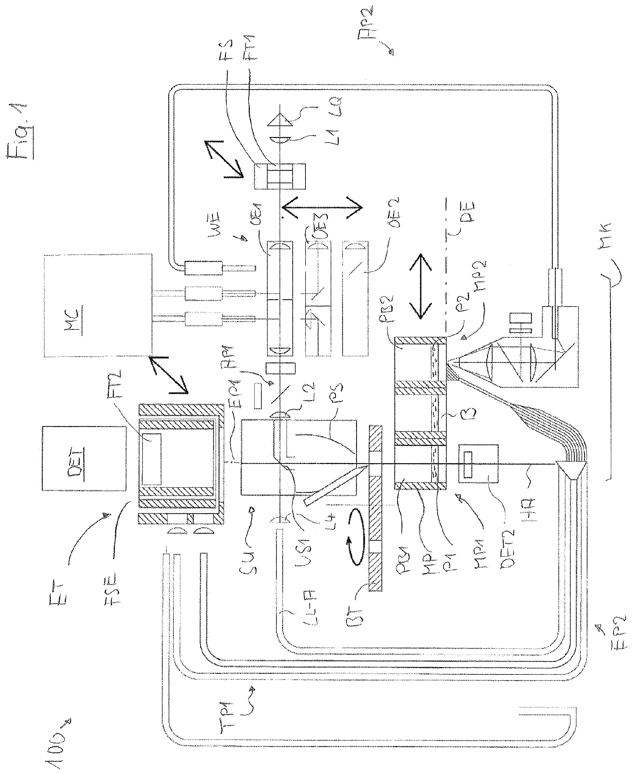

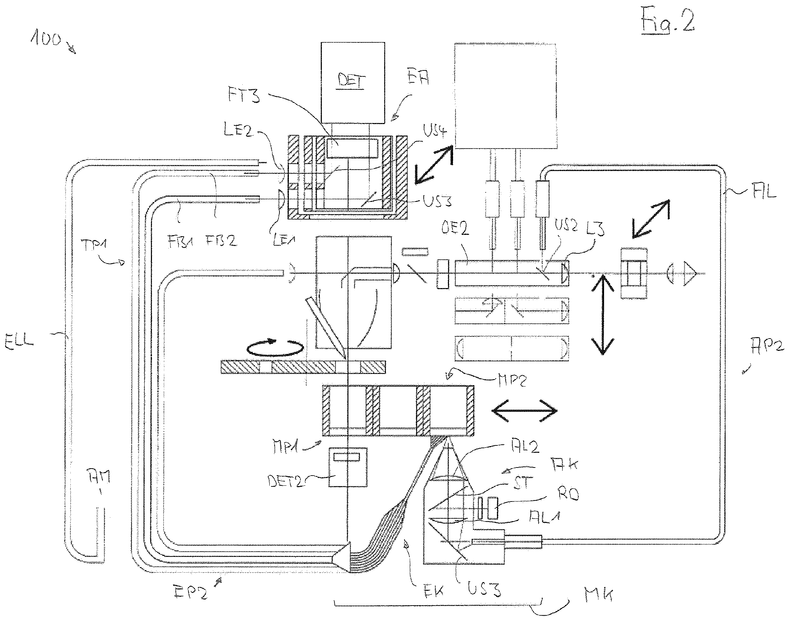

In den Fig. 1 und 2 ist schematisch eine Vorrichtung 100 zur Ermittlung optischer Eigenschaften von Proben mittels Fluoreszenzspektroskopie und anderen optischen Untersuchungsmethoden (Lumineszenzmessung, Absorptionsmessung) gezeigt. Die Vorrichtung kann in mehreren unterschiedlichen Betriebsmodi für unterschiedliche Messverfahren betrieben werden. Fig. 1 zeigt die Vorrichtung in einer Konfiguration, bei der die optischen und anderen Komponenten so eingestellt sind, dass in einem ersten Betriebsmodus eine Fluoreszenzmessung von oben ("Top-Messung") durchgeführt werden kann. Fig. 2 zeigt eine Konfiguration, mit der eine Fluoreszenzmessung von unten ("Bottom-Messung") durchgeführt werden kann.

In der Beschreibung werden relative Positionen optischer Elemente mit Präpositionen wie "zwischen", "vor", "hinter" oder dergleichen beschrieben. Diese Präpositionen beziehen sich auf Positionen entlang eines optischen Pfads zwischen einer Lichtquelle über eine Messposition bis zu einem Detektor. Bezeichnungen wie "erster", "zweiter", "dritter" etc. dienen ausschließlich der eindeutigen Identifizierung der entsprechenden Elemente und beschreiben im Allgemeinen nicht die Reihenfolge, in der Elemente in einem optischen Pfad angeordnet sind.

Die zu messenden Proben werden in Probenbehälter gefüllt, die im Beispielsfall durch Vertiefungen bzw. Näpfchen in einer Mikroplatte MP ausgebildet sind, welche von einer nicht dargestellten Aufnahmeplatte aufgenommen wird, die motorisch horizontal zu einer Probenebene PE verfahren werden kann. Die dargestellten Probenbehälter haben jeweils einen für sichtbares Licht transparenten Boden B. Sie sind daher z.B. für Fluoreszenzmessung oder Lumineszenzmessungen von unten oder für Absorptionsmessungen geeignet. Für Fluoreszenzmessungen von oben und für Lumineszenzmessungen werden in der Regel Mikroplatten mit Probenbehältern mit nicht transparentem Boden verwendet. Die Mikroplatte ist im Beispielsfall so angeordnet, dass sich ein erster Probenbehälter PB1 mit einer darin befindlichen ersten Probe P1 in einer ersten Messposition MP1 befindet, in der eine Fluoreszenzmessung von oben durchgeführt werden kann. Eine vertikale optische Hauptachse HA der Vorrichtung verläuft durch die erste Messposition MP1. Ein zweiter Probenbehälter PB2 mit einer darin befindlichen zweiten Probe P2 befindet sich dann in einer zweiten Messposition MP2, die horizontal versetzt in einem geringen Abstand neben der ersten Messposition MP1 liegt.

Die Vorrichtung 100 hat eine primäre Lichtquelle LQ in Form einer Xenon-Lampe. Es kann sich je nach Anwendung um eine Blitzlampe oder eine Dauerstrich-Lampe handeln. Alternativ kann zum Beispiel auch eine Glühlampe (zum Beispiel eine Halogenlampe, für Dauerstrich-Betrieb) oder ein Laser (Dauerstrich oder gepulst) als Lichtquelle verwendet werden. Die polychromatische Lichtquelle LQ hat ein breites Emissionsspektrum im sichtbaren Spektralbereich ("Weißlicht"). Die Lichtquelle ist an einer Trägerstruktur der Vorrichtung fest bzw. stationär angebracht, sie kann bei Bedarf zum Zwecke der Justage in ihrer Lage leicht verändert werden.

Die Vorrichtung 100 weist weiterhin einen photosensitiven Detektor DET auf, der oberhalb der Probenebene zentriert zur Hauptachse HA in einer festen Detektorposition an der Trägerstruktur der Vorrichtung montiert ist. Dieser stationäre Detektor DET wird gleichermaßen für Top-Messung und Bottom-Messung genutzt, also im ersten und im zweiten Betriebsmodus.

Bei der in Fig. 1 gezeigten ersten Betriebsstellung wird ein erster Anregungspfad AP1 zur Übertragung von spektralen Anteilen von Licht der Lichtquelle LQ als Anregungslicht von oben in die erste Messposition MP1 genutzt. Zum ersten Anregungspfad gehört eine erste Linse L1 zur Parallelisierung des divergenten Weißlichts der Lichtquelle. Anstelle einer Einzellinse kann auch eine Linsenanordnung mit mehreren Linsen, beispielsweise ein Linsenpaar, vorgesehen sein. Der ersten Linse L1 ist ein Filterschieber FS nachgeschaltet, der mehrere Aufnahmemöglichkeiten für Filter FT1 aufweist und mithilfe eines Verstellmotors horizontal bewegt werden kann. Anstelle eines Filterschiebers kann auch ein Filterrad vorgesehen sein.

Dem Filterschieber ist eine motorisch umschaltbare Weicheneinrichtung WE nachgeschaltet, die mehrere wahlweise in den Strahlengang einfahrbare optische Einheiten OE1, OE2, OE3 aufweist. Für die dargestellte Messung von oben ist die erste optische Einheit OE1 in den Anregungspfad eingefügt. Die erste optische Einheit OE1 kann mehrere Linsen aufweisen und lässt das vorgefilterte Anregungslicht geradlinig in Richtung einer selektiven Strahlumlenkeinrichtung SU durch. Wird anstelle der ersten optischen Einheit OE1 die dritte optische Einheit OE3 in den Strahlengang eingefügt, so wird das von der Lichtquelle LQ kommende Anregungslicht über Lichtleiter oder ohne Nutzung von Lichtleitern (über geometrische Strahlführung) in einen optional vorgesehenen dispersiven Monochromator MC ausgekoppelt. In diesem Fall ist eine filterfreie Position im Filterschieber FS einzustellen, um den dispersiven Monochromator mit Weißlicht beschicken zu können. In dieselbe optische Einheit OE3 wird Licht einer bestimmten Wellenlänge aus dem dispersiven Monochromator heraus wieder über einen Lichtleiter (oder ohne Lichtleiter) und eine Linse eingekoppelt und mittels eines Umlenkspiegels in Richtung der Strahlumlenkeinrichtung SU gelenkt.

Eine wahlweise in den Strahlengang einfügbare zweite optische Einheit OE2 wird genutzt, wenn im zweiten Betriebsmodus eine Von-unten-Messung durchgeführt werden soll (vgl. Fig. 2).

Der erste Anregungspfad AP1 führt von der umschaltbaren Weicheneinrichtung WE über ein schräg gestelltes Quarzglasplättchen zur Auskopplung von Anregungslicht zu einer Referenzdiode horizontal zu der oberhalb der ersten Messposition MP1 angeordneten selektiven Strahlumlenkeinrichtung SU, die dazu dient, den ersten Anregungspfad AP1 vom ersten Emissionspfad EP1 zu separieren. Die Strahlumlenkeinrichtung weist hinter einer Linse L2 einen horizontalen Abschnitt eines lichtdichten Röhrchens auf, welcher an einem in 45° zur Horizontalrichtung geneigten Umlenkspiegel US1 in einen nach unten offenen vertikalen Abschnitt des Röhrchens übergeht. Der vertikale Abschnitt ist koaxial zur Hauptachse HA und zur ersten Messposition MP1 oberhalb dieser ersten Messposition angebracht, so dass der erste Anregungspfad AP1 am Umlenkspiegel US1 umgelenkt bzw. gefaltet wird und Anregungslicht vertikal von oben in eine an der ersten Messposition MP1 angeordnete Probe geleitet wird.

Zwischen der Strahlumlenkeinrichtung SU und der Ebene der ersten Messposition ist ein motorisch verstellbarer Blendenradteller BT mit verschiedenen Blendendurchmessern für unterschiedliche Probenbehälterdurchmesser vorgesehen. Hierdurch können unter anderem Probleme mit Crosstalk bei Lumineszenzmessungen vermindert oder vermieden werden.

In der ersten Probe P1 befindet sich eine Substanz, die durch das Anregungslicht dazu angeregt werden kann, Fluoreszenzlicht zu emittieren. Das Fluoreszenzlicht ist gegenüber dem Anregungslicht zu niedrigeren Energien bzw. größeren Wellenlängen verschoben. Das Ausmaß der spektralen Rotverschiebung ist für die Substanz spezifisch und wird als Stokes-Verschiebung bzw. Stokes-Shift bezeichnet.

Das Emissionslicht gelangt über einen ersten Emissionspfad EP1 im Wesentlichen vertikal nach oben von der Probe P1 zu dem Detektor DET, der in Abhängigkeit vom auftreffenden Licht elektrische Signale erzeugt, die einer nicht gezeigten Auswerteeinheit zugeführt werden, um das Emissionslicht zur Charakterisierung der Probe spektral auszuwerten. Das nach allen Richtungen abstrahlende Emissionslicht wird mithilfe eines nach oben sich öffnenden Parabolspiegels PS der Strahlumlenkeinrichtung kollimiert, so dass die Strahlen des Emissionslichts im Wesentlichen parallel zur Vertikalrichtung in Richtung Detektor DET laufen.

Oberhalb der Strahlumlenkeinrichtung SU ist zwischen dieser und dem Detektor DET eine zwischen mehreren Betriebsstellungen umschaltbare Emissionsfilterträgereinrichtung ET zur selektiven Filterung von Emissionslicht vor Eintritt in den Detektor DET angebracht. Die Emissionsfilterträgereinrichtung weist einen linear horizontal verschiebbaren Filterschieber FSE auf, der für die Messungen von oben mehrere Filteraufnahmepositionen für Emissionsfilter unterschiedlicher Durchlasscharakteristik aufweist. In der beispielhaft dargestellten Konfiguration ist ein Filterelement FT2 unmittelbar vor dem Detektor DET im ersten Emissionspfad EP1 eingefügt. Der Detektor DET kann beispielsweise einen Photomultiplier aufweisen oder eine Photodiode. Der erste Emissionspfad EP1 führt somit von der ersten Probenposition MP1 geradlinig vertikal zu dem darüber angeordneten Detektor, wobei das Emissionslicht einen Emissionsfilter durchtritt.

Die Vorrichtung 100 stellt weiterhin einen zweiten Anregungspfad AP2 und einen zweiten Emissionspfad EP2 bereit, die bei einer Fluoreszenzmessung von unten (Bottom-Messung) genutzt werden. Für die Nutzung des zweiten Anregungspfads wird die Weicheneinrichtung WE so umgestellt, dass die zweite optische Einheit OE2 in ihre Funktionsstellung gerät, in welcher das vom Filterschieber FS kommende Anregungslicht einkoppeln kann (vgl. Fig. 2). Die zweite optische Einheit OE2 umfasst eine Linse L3 und einen dahinter angeordneten Umlenkspiegel US2, so dass mithilfe dieser optischer Einheit das bereits auf einen Wellenlängenbereich vorselektierte Licht in den Eintrittsbereich eines Anregungslichtleiters AL eingekoppelt werden kann. Bei dem Anregungslichtleiter AL kann es sich beispielsweise um einen Flüssigkeitslichtleiter oder einen Lichtleiter aus Quarz, Glas oder Polymethylmethacrylat (PMMA) handeln.

Am probenseitigen Ende des Anregungslichtleiters AL befindet sich unterhalb der zweiten Messposition MP2 ein Austrittskopf AK, dessen optische Komponenten so ausgelegt sind, dass das durch den Anregungslichtleiter AL zugeführte Anregungslicht im Wesentlichen vertikal nach oben zur Unterseite eines in der zweiten Messposition MP2 angeordneten Probenbehälters (hier zweiter Probenbehälter PB2 mit transparentem Boden und zweiter Probe P2) geleitet wird. Der Austrittskopf AK ist stationär montiert, also fest mit einer Trägerstruktur der Vorrichtung verbunden. Ein um 45° schräg gestellter Umlenkspiegel US3 lenkt das horizontal eingekoppelte Anregungslicht aus dem Anregungslichtleiter AL in die Vertikale. Eine nachgeschaltete erste Linse AL1 parallelisiert das divergent aus dem Anregungslichtleiter AL tretende Licht. Über eine zweite Linse AL2 wird Anregungslicht auf den transparenten Boden des Probenbehälters PB2 fokussiert.

Zwischen den beiden Linsen AL1, AL2 befindet sich im parallelen Strahlengang ein um 45° zur Achse geneigtes Quarzglasplättchen, welches als physikalischer Strahlteiler ST wirkt und einen geringen Anteil des Anregungslichts (wenige Prozent, z.B. 5% bis 10%) seitlich aus dem Austrittskopf AK in Richtung eines Referenzdetektors RD in Form einer Referenzdiode umlenkt. Ein vorgeschalteter Neutralfilter begrenzt die Lichtintensität auf der Referenzdiode, damit diese nicht in Sättigung gehen kann. Ausgangssignale der Referenzdiode können durch die angeschlossene Auswerteeinrichtung genutzt werden, die auftreffende Intensität des Anregungslichts bei der Auswertung des Emissionslichts quantitativ zu berücksichtigen. Das ausgekoppelte Referenzlicht kann z.B. zur Regelung der Lichtquelle und/oder bei Auswertung der Intensitätsmessungen zur Messwertkorrektur genutzt werden.

Das durch den zweiten Anregungspfad AP2 in die Probe P2 eingekoppelte Anregungslicht regt die Probensubstanz zur Emission von Fluoreszenzlicht an, welches mithilfe des zweiten Emissionspfads EP2 zum Detektor DET geführt wird. Ein unterhalb der zweiten Messposition MP2 angeordneter Eintrittskopf EK dient zur Einkopplung des von der Unterseite der Probe emittierten Emissionslichts in das Eintrittsende eines ersten Teilpfads TP1 des zweiten Emissionspfads EP2. Der erste Teilpfad TP1 führt unter Umgehung der ersten Messposition MP1 seitlich an dieser vorbei bis auf Höhe der Emissionsfilterträgereinrichtung ET. Diese ist als Einkoppeleinrichtung zum Einkoppeln von Emissionslicht des ersten Teilpfads TP1 in den ersten Emissionspfad EP1 ausgeführt. Nach bzw. hinter der Einkopplung fällt der zweite Emissionspfad mit dem ersten Emissionspfad zusammen und führt zum Detektor DET, mit dem das Emissionslicht erfasst werden kann.

Nachfolgend werden einige Besonderheiten im zweiten Emissionspfad erläutert.

Der Eintrittskopf EK am probenseitigen Ende des ersten Teilpfads TP1 weist eine Vielzahl von Lichtleitfasern auf, die ringförmig bzw. kegelförmig um die optische Achse der zweiten Messposition (Messposition von unten) angeordnet sind. Bei den Lichtleitfasern kann es sich beispielsweise um Kunststofffasern aus PMMA handeln. Es ist auch möglich, die Fasern als Flüssiglichtleiter oder aus Quarz oder aus Glas zu fertigen. Die einzelnen Lichtleitfasern haben probenseitige Lichteintrittsenden, die gegenüber der optischen Achse der Messposition so geneigt sind (Neigungswinkel zur Achse z.B. zwischen 10° und 40°), dass im Wesentlichen nur das Emissionslicht aus dem emittierenden Durchmesser des transparenten Bodens desjenigen Probengefäßes PB2 erfasst wird, welches sich gerade in der zweiten Messposition MP2 (für die Messung von unten) befindet. Dadurch ergibt sich unter anderem der Vorteil, dass Licht aus benachbarten Probenbehältern nicht in die Einzelfasern (Lichtleitfasern) einkoppeln kann. Weiterhin ist der Neigungswinkel der Lichteintrittsenden der Einzelfasern so gewählt, dass direkt am Boden des Probenbehälters PB2 reflektiertes Anregungslicht nicht direkt in die Lichtleitfasern hineinreflektiert werden kann und somit nicht einkoppeln kann. Hierdurch ist eine winkelselektive Blockung von Anregungslicht erzielbar. Außerdem wird durch Kippen der Lichtleiterfasern der erfassbare Raumwinkel der Faser-Apertur bezüglich Probenbehälterbodens besser ausgenützt und die Lichtleitfaser kann mehr Emissionslicht aufnehmen als bei einer vertikalen Ausrichtung.

Die Einzelfasern (d.h. die einzelnen Lichtleitfasern) werden an der Austrittsseite des Eintrittskopfs EK gruppenweise zu zwei voneinander getrennten Faserbündeln FB1, FB2 mit jeweils rundem Querschnitt zusammengefasst. Die Faserbündel werden optisch getrennt voneinander zur Emissionsfilterträgereinrichtung ET geführt. Am Ende der Faserbündel bzw. Lichtleiterbündel kann eine Querschnittswandlung erfolgen, was jedoch nicht zwingend ist. An den Enden der Faserbündel FB1, FB2 befinden sich jeweils Linsen LE1, LE2 zur Parallelisierung des jeweils divergent aus den Faserenden austretenden Emissionslichts in Richtung einer vertikalen Seitenwand SW der Emissionsfilterträgereinrichtung ET.

Die Emissionsfilterträgereinrichtung ET ist hier als verstellbares Verschlusselement ausgebildet, welches einen Lichteintritt von Emissionslicht aus dem ersten Teilpfad TP1 in das Innere der Emissionsträgerfiltereinrichtung unterbindet, wenn sich die Emissionsfilterträgereinrichtung nicht in einer später noch erläuterten Einkoppelstellung (Fig. 2) befindet, sondern beispielsweise in der in Fig. 1 gezeigten Betriebsstellung, in welcher Von-oben-Messungen im ersten Betriebsmodus durchgeführt werden können. In der Einkoppelstellung (Fig. 2) wird dagegen das direkt von der Seite der Strahlumlenkeinrichtung kommende Licht mittels des geschlossenen Bodens der Emissionsfilterträgereinrichtung ET geblockt, so dass die Emissionsfilterträgereinrichtung ET auch als verstellbares Verschlusselement ausgebildet ist, welches einen Durchtritt von Emissionslicht aus ersten Emissionspfad in Richtung des Detektors DET unterbindet, wenn sich die Emissionsfilterträgereinrichtung in der Einkoppelstellung befindet.

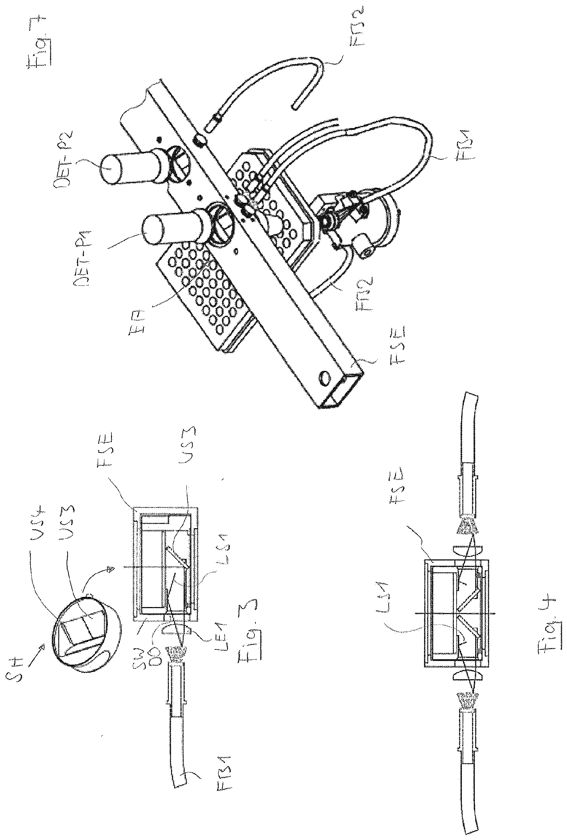

Die Emissionsfilterträgereinrichtung ist als umschaltbare Einkoppeleinrichtung zur wahlweisen Einkopplung von Emissionslicht aus dem ersten Teilpfad TP1 in den ersten Emissionspfad EP1 ausgebildet. Dazu weist die Emissionsfilterträgereinrichtung einen Einkoppelabschnitt EA zur Umlenkung von Emissionslicht aus dem ersten Teilpfad TP1 in Richtung des Detektors DET auf. Fig. 2 zeigt einen vertikalen Schnitt durch die Emissionsfilterträgereinrichtung im Einkoppelabschnitt EA. Weitere Details sind aus Fig. 3 ersichtlich. In der Seitenwand SW des Emissionsfilterträgers bzw. des Filterschiebers FSE sind horizontal durchgehend Durchgangsöffnungen DO ausgebildet, die in der Einkoppelstellung derart mit den Lichtaustrittsenden der Faserbündel FB1, FB2 fluchten, dass aus diesen Faserbündeln austretendes Emissionslicht durch die nachgeschalteten Linsen LE1, LE2 hindurch und durch diese Öffnungen ins Innere des Emissionsfilterträgers gelangen kann. Im Bereich des Einkoppelabschnitts sind hinter den Öffnungen um 45° gegen die Horizontale geneigte Umlenkspiegel US3, US4 vorgesehen, die das aus den Faserbündeln austretende Emissionslicht in Richtung des Detektors DET so umlenken können, dass der oberhalb der Umlenkspiegel angebrachte Emissionsfilter FT3 durchstrahlt werden kann und das Emissionslicht danach unmittelbar in den Detektor DET fällt.

In den Einkoppelabschnitt sind auch streulichtreduzierende Elemente integriert. Die Bohrungen im Schiebergehäuse, der Filterschieber selbst und der lichtführende Kanal in dem flachzylindrischen Spiegelhalter SH, auf welchem die Spiegel aufgeklebt sind (siehe Fig. 3), fungieren in Farbe und Ausführung als streulichtreduzierende Elemente. Außerdem ist die besondere Form des Spiegelhalters SH siehe (Figur 3 und 4) zu erwähnen, die verhindert, dass Licht aus dem Lichtleiter (Streulicht oder das zu detektierende Nutzlicht) direkt unter schrägem Winkel auf den EM-Filter trifft, ohne über den Spiegel gelaufen zu sein. Einige Oberflächen des Spiegelhalters dienen als lichtführende Elemente, die dafür sorgen, dass Nutzlicht nur über den "Umweg" des Umlenkspiegels zum Emissionsfilter und dem dahinter angeordneten Detektor gelangen kann. Ein beispielhafter abgeschirmter Lichtstrahl LS1 ist in Fig. 3 und 4 dargestellt. Die Streulichtreduzierung und/oder die Lichtführung bzw. die hierfür besonders gestalteten Elemente werden als vorteilhafte angesehen, da ohne aktive Streulichtreduzierung und/oder gezielte Leitung des Nutzlichts auch messtechnisch der Background tatsächlich erhöht ist, da die Emissionsfilter Licht unter schrägen Winkeln sehr viel schlechter blocken und somit die Anregungswellenlänge mit höherer Intensität durch den Emissionsfilter tritt.

Wie erwähnt, werden für die "Messungen von oben" alternative Stellen im horizontal motorisch beweglichen Filterschieber FSE genutzt, in denen keine seitlichen Öffnungen vorhanden sind, sondern nur Emissionsfilter (vgl. Fig. 1). In diesen Betriebsstellungen wirkt der Emissionsfilterschieber als verstellbares Verschlusselement bzw. "Shutter", da sich ein geschlossener Abschnitt der Seitenwand vor die Austrittsöffnungen der Faserbündel FB1, FB2 schiebt, so dass kein Emissionslicht durch den ersten Teilpfad TP1 zum Detektor DET gelangen kann.

Die umschaltbare Emissionsfilterträgereinrichtung ET ist hier so ausgelegt, dass sie als umschaltbare Einkoppeleinrichtung zur wahlweisen Einkopplung von Emissionslicht von einer Messposition in den ersten Emissionspfad EP1 dienen kann. Zum Beispiel wird Emissionslicht von der zweiten Messposition MP2 über den ersten Teilpfad TP1 zu dieser umschaltbaren Einkoppeleinrichtung geführt. Alternativ oder zusätzlich ist es auch möglich, Emissionslicht von einem alternativen Messort AM kommend so in den ersten Emissionspfad EP1 einzukoppeln, dass der Detektor DET für diese Messung am alternativen Messort genutzt werden kann. Zur Veranschaulichung zeigen die Fig. 1 und 2 einen Emissionslichtleiter ELL, welcher detektorseitig an der umschaltbaren Einkoppeleinrichtung so anschließt, dass bei entsprechender Stellung der Einkoppeleinrichtung Emissionslicht aus dem Emissionslichtleiter ELL über die Einkoppeleinrichtung in den ersten Emissionspfad Richtung Detektor DET eingekoppelt werden kann. Das eintrittsseitige Ende des Emissionslichtleiters ELL kann beispielsweise an bzw. einem alternativen Messort AM bzw. an einer Messposition liegen, die für eine Lumineszenzmessung vorgesehen ist und somit keine Einrichtungen zur Einkopplung von Anregungslicht benötigt.

Im dargestellten Beispiel sind zwei seitliche Öffnungen zur Einkopplung von Emissionslicht an der gleichen Seite der Emissionsfilterträgereinrichtung ET bzw. des Filterschiebers vorgesehen (vgl. Fig. 3). Es ist auch möglich, die Einkopplung von Emissionslicht in die umschaltbare Einkoppeleinrichtung von zwei gegenüberliegenden Seiten vorzunehmen (vgl. Fig. 4). Beispielsweise können mithilfe einander gegenüberliegender Umlenkspiegel vier Lichtleiter an einer Filterposition eingekoppelt werden.

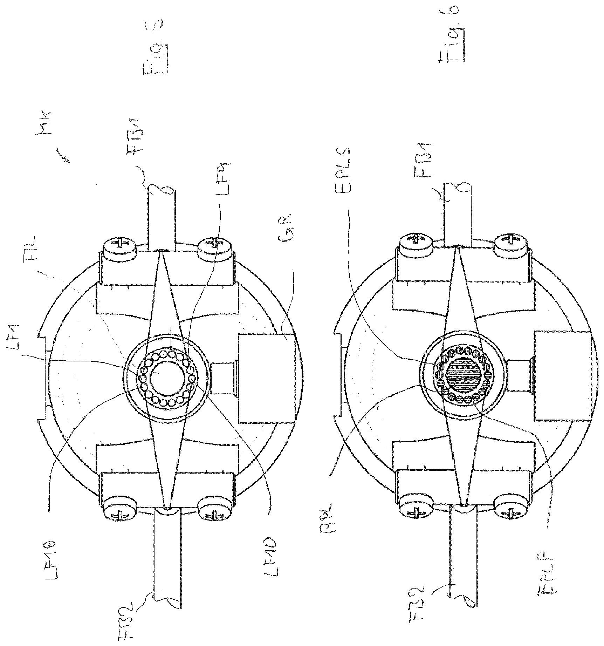

In den schematischen Darstellungen der Fig. 1 und 2 sind der Austrittskopf AK am Ende des Anregungslichtleiters AL und der Eintrittskopf EK am Lichteintritt des ersten Teilpfads TP1 räumlich getrennt dargestellt. Eine vorteilhafte Realisierungsmöglichkeit sieht eine Integration dieser beiden Funktionsbauteile in einem gemeinsamen Messkopf MK für eine "Von-unten-Messung" vor. Fig. 5 zeigt beispielhaft eine Draufsicht auf die der Probe zugewandte Oberseite eines Messkopfs MK. Zentriert zur Messkopfachse ist in der Mitte das runde Austrittsende des Anregungslichtleiters AL erkennbar. Um den Anregungslichtleiter AL herum sind die Lichteintrittsenden einer Vielzahl von Lichtleitfasern zum Empfang des Emissionslichts ringförmig angeordnet. Die Endabschnitte liegen auf einer sich zur Probenseite verjüngenden Kegelmantelfläche, so dass die Lichteintrittsenden gegenüber der Mittelachse um ca. 20° geneigt sind. Das Gehäuse GR für den Referenzdetektor zur Auskopplung von Anregungslicht zum Zwecke der Referenzierung kurz vor der Probe ist ebenfalls gezeigt.

Die in dem rechts gezeigten Halbkreis befindlichen Einzelfasern LF1 bis LF9 sind im Beispielsfall zum ersten Faserbündel FB1 zusammengefasst, während die links erkennbaren Einzelfasern LF10 bis LF18 zum runden Faserbündel FB2 zusammengefasst sind. Es liegt hier eine räumliche Trennung der zum Einkoppeln von Emissionslicht vorgesehenen Faserenden in die zwei Hälften der insgesamt runden Anordnung vor. Diese Anordnung und Zusammenfassung hat somit prinzipiell die Funktion eines geometrischen Strahlteilers, wobei Emissionslicht je nach Auftreffort im Bereich der Faserenden entweder in das erste Faserbündel FB1 oder in das zweite Faserbündel FB2 eingekoppelt wird.

Eine derartige Ausgestaltung eines Messkopfs (oder Eintrittskopfs) mit geometrischer Strahlteilung kann unabhängig von den sonstigen Merkmalen der Ausführungsform auch bei anderen gattungsgemäßen oder nicht-gattungsgemäßen Vorrichtungen vorteilhaft sein, insbesondere bei Vorrichtungen ohne den ersten Teilpfad. Es kann sich also insoweit um eine eigenständige Erfindung handeln.

Die vorliegende Anmeldung offenbart somit auch einen Eintrittskopf oder Messkopf zum Empfangen von aus einer Probe austretendem Licht und zum Einkoppeln des Lichts in einen optischen Pfad, wobei der Eintrittskopf oder Messkopf ein Faserbündel mit einer Vielzahl von Lichtleitfasern mit Lichteintrittsenden aufweist, die an einer Lichteintrittsseite des Eintrittskopfs oder Messkopfs in mindestens zwei räumlich voneinander getrennten Gruppen (einer erste Gruppe und mindestens einer zweite Gruppe) angeordnet sind, wobei die Lichtleitfasern der Gruppen an der Austrittsseite des Eintrittskopfs gruppenweise zu zwei oder mehr jeweils eine Gruppe von Lichtleitfasern umfassenden Teil-Faserbündeln (erstes Teil-Faserbündel und mindestens ein zweites Teil-Faserbündel) zusammengefasst sind, die optisch voneinander getrennt verlaufen. Die zwei oder mehr Teil-Faserbündel können den optischen Pfad oder wenigstens einen ersten Abschnitt des optischen Pfades bilden, in den das empfangene Licht eingekoppelt wird. Vorzugsweise können genau zwei Gruppen von Lichtleitfasern und entsprechend genau zwei Teil-Faserbündel vorgesehen sein. Diese können jeweils die gleiche Anzahl von Lichtleitfasern aufweisen, was jedoch nicht zwingend ist. Die Lichteintrittsenden können z.B. eine ringförmige Anordnung bilden, die in zwei Hälften aufgeteilt ist (vgl. Fig. 6). Auch eine Aufteilung in drei Drittel o.dgl. ist möglich. Die Lichteintrittsenden können gegenüber der Mittelachse des Eintrittskopfs oder Messkopfs derart geneigt sein, dass ein Aperturwinkel der Lichtleitfasern Emissionslicht im Wesentlichen nur aus einem emittierenden Durchmesser eines in einer Messposition angeordneten Probenbehälters erfassen kann. Für bestimmte Messanforderungen kann es vorteilhaft sein, die Einzelfasern zu mischen, so dass eine statistisch gemittelte Lichtintensität dem Detektor zugeführt werden kann. Auch weitere im vorangehenden Text und im nachfolgenden Text beschriebene Merkmale können bei dieser Erfindung einzeln oder in Kombination vorgesehen sein.

Diese geometrische Strahlteilung am Eintritt des Messkopfs MK kann auf unterschiedliche Weisen genutzt werden. Unter anderem wird dadurch eine besondere Möglichkeit zur Messung der Fluoreszenzpolarisation von unten geschaffen (vgl. Fig. 6 und zugehörige Beschreibung). Bei der Messung der Fluoreszenzpolarisation wird bekanntlich eine Fluoreszenzprobe mit polarisiertem Anregungslicht bestrahlt. Das Emissionslicht wird dann mit einem senkrecht zum Anregungspolarisationsfilter ausgerichteten Emissionspolarisationsfilter ausgewertet. Aufgrund der unter 90° gekreuzten Anregungs- und Emissionspolarisationsfilter würde eigentlich kein Emissionslicht zum Detektor gelangen. Ist aber die zu untersuchende Probe so beschaffen, dass sich die fluoreszierenden Moleküle etwas aus den rechtwinklig zueinander stehenden Polarisationsebenen herausdrehen, kann emittiertes Licht den Emissionspolarisationsfilter passieren. Je nachdem, wie viele Fluoreszenzmoleküle sich in der Probe befinden und/oder wie rotationsfreudig die Moleküle zum Beispiel aufgrund ihrer Masse sind, werden die Moleküle durch das Anregungslicht mehr oder weniger stark in Rotation versetzt und die Antwort im Emissionslicht ist mehr oder weniger stark. Eine zweite Messung der Probe mit einem Emissionspolarisationsfilter, der parallel zum Anregungspolarisationsfilter ausgerichtet ist, lässt jegliches Emissionslicht passieren und wird in Relation zur ersten Messung gesetzt.

Der Messkopf MK kann relativ einfach für eine zuverlässige Messung der Fluoreszenzpolarisation modifiziert werden (vgl. Fig. 6). Dazu kann beispielsweise auf das Austrittsende des Anregungslichtleiters ein Anregungspolfilter APL mit definierter Durchlassrichtung aufgebracht werden. Die Lichteintrittsenden von einer der Gruppen, beispielsweise der Lichtleitfasern LF1 bis LF9, können mit einem gemeinsamen Polarisationsfilter EPLS versehen werden, der senkrecht zur Anregungspolarisation, also in Sperrrichtung ausgerichtet ist. Das hiervon durchgelassene Emissionslicht wird dann durch das erste Faserbündel FB1 zu einem Detektor geleitet. Die Enden der gegenüberliegenden Lichtleitfasern (LF10 bis LF18) werden mit einem Eintrittspolarisationsfilter EPLP versehen, der parallel zum Anregungspolfilter APL orientiert ist und somit Emissionslicht durchlässt, welches die Polarisationsrichtung des Anregungslichts hat. Diese Lichtleitfasern werden zum zweiten Faserbündel FB2 zusammengefasst.

Wie in Fig. 7 dargestellt, kann für jedes der beiden Faserbündel FB1, FB2 ist ein gesonderter Detektor DET-P1 bzw. DET-P2 vorgesehen sein, wobei das Emissionslicht aus dem jeweiligen Faserbündel durch einen gesonderten Kanal der Einkoppeleinrichtung zum zugeordneten Detektor geführt wird. Damit können die eigentliche Messung (mit senkrecht zueinander ausgerichteten Polarisationsrichtungen von Anregungslicht und Emissionslicht) und die Referenzmessung (mit parallelen Ausrichtungen von Anregungspolfilter und Emissionspolfilter) zeitgleich durchgeführt werden, wodurch Messungen mit hoher Präzision und Aussagekraft möglich sind.

Die Anordnung der Emissionspolarisationsfilter direkt unterhalb der Probe, aufgesetzt oder angebracht an die Enden der Emissionslichtleitfasern, hat unter anderem den Vorteil, dass die depolarisierenden Polarisationseffekte durch optische Komponenten, wie zum Beispiel Linsen oder Spiegel oder auch Lichtleiter, weitgehend minimiert werden können, wenn die Polarisationsfilter so nahe zum Entstehungsort des Emissionslichts gebracht werden.

Die Aufteilung der Faserbündel am Eintrittskopf in zwei oder mehr voneinander gesonderte Faserbündel schafft auch die Möglichkeit, zwei oder mehr unterschiedliche Emissionswellenlängen gleichzeitig mit zwei oder mehr jeweils zugeordneten Detektoren zu erfassen. Diese Messung würde natürlich ohne Polarisationsfilter erfolgen. Eine (geometrische) Strahlteilung in mehr als zwei voneinander getrennte Pfade ist mit herkömmlichen Strahlteilern, wie zum Beispiel halbdurchlässigen Spiegeln, nicht möglich oder nur in Kaskaden. Die geometrische Strahlteilung mithilfe von gruppenweise räumlich getrennten Faserbündeln lässt auch Strahlteilungen in drei oder mehr Teilstrahlen zu.

Es wäre auch möglich, an den Enden der zwei oder mehr voneinander gesonderten Emissionsfaserbündel unterschiedliche Detektoren mit unterschiedlichen spektralen Empfindlichkeiten zu verwenden, um bei unterschiedlichen Emissionswellenlängen stets eine möglichst hohe Signalausbeute zu erreichen.

Bei dem Ausführungsbeispiel der Fig. 1 und 2 sind die erste Messposition MP1 (für die Top-Messung) und die zweite Messposition MP2 (für die Bottom-Messung) räumlich voneinander getrennt. Dies schafft im gezeigten Beispiel die Möglichkeit, unterhalb der ersten Messposition MP1 einen weiteren Detektor DET2 für Absorbanzmessungen fest (stationär) anzubringen, was im Beispiel von Fig. 1 und Fig. 2 realisiert ist.

Wird auf einen solchen weiteren Detektor verzichtet oder wird dieser weitere Detektor als verschiebbarer Detektor ausgebildet, der für die Messung wahlweise in diese Messposition gebracht und ansonsten aus dem Bereich unter der ersten Messposition herausbewegt werden kann, so wäre es auch möglich, die Messung von unten am Ort der ersten Messposition MP1 vorzunehmen. Mit anderen Worten würde in diesem Fall die erste Messposition MP1 und die zweite Messposition MP2 zusammenfallen bzw. derselben Position entsprechen. Der Messkopf MK mit Austrittskopf AK und Eintrittskopf EK würde dann direkt unterhalb der ersten Messposition MP1 angeordnet werden. Mit einer derartigen Anordnung wäre im Prinzip auch eine gleichzeitige Fluoreszenzmessung oder Lumineszenzmessung von oben und von unten möglich, wenn entsprechend zwei jeweils zugeordnete Detektoren genutzt werden. Die Messergebnisse könnten beispielsweise für eine Verhältnisbildung genutzt werden, um die Verlässlichkeit von Messergebnissen zu überwachen.

Um einen reinen Lumineszenzmesskopf für eine Bottom-Messung mit hoher Lichtausbeute zur Verfügung zu stellen, könnte die Lichteinkopplung in den Emissionspfad über den beispielhaft gezeigten Lichtleiter ELL erfolgen. Da bei einer reinen Lumineszenzmessung kein Anregungslicht erforderlich ist, kann bei Bedarf eine große Anzahl von einzelnen Lichtleitfasern zu einem Faserbündel relativ moderater Querschnittsdimensionen zusammengefasst werden, so dass eine solche Messoptik nur einen geringen Platzbedarf hätte.

Im Übrigen ist es nicht zwingend, den ersten Teilpfad des zweiten Emissionspfades vom Eintrittskopf EK unterhalb der zweiten Messposition zum umschaltbaren Emissionsfilterträger ET zu führen. In Fig. 1 ist eine alternative Variante gezeigt, bei der ein Lichtleiter LL-A eines (alternativen) erster Teilpfads TP1-A vom Eintrittskopf EK bis auf die Höhe der Strahlumlenkeinrichtung SU führt. Das aus dem horizontal verlaufenden Ende des Lichtleiters austretende Emissionslicht wird über eine Sammellinse L4 im Wesentlichen horizontal auf die mit einer Reflexionsbeschichtung versehene Rückseite des Umlenkspiegels US1 gerichtet. Diese ebene Spiegelfläche lenkt das Emissionslicht vertikal nach oben in Richtung des Emissionsfilterträgers ET und des dahinter angeordneten Detektors DET. Hier findet die Einkopplung des zweiten Emissionspfades in den ersten Emissionspfad vor Eintritt in die Emissionsfilter statt. Dieser braucht dann nicht als umschaltbare Einkoppeleinrichtung ausgeführt zu sein. Ein nicht dargestellter schaltbarer Verschluss kann ggf. den Austritt von Emissionslicht aus dem Lichtleiter LL-A unterbinden, wenn im ersten Betriebsmodus gearbeitet wird.

## Patentansprüche

1. Vorrichtung zur Ermittlung optischer Eigenschaften von Proben in unterschiedlichen Betriebsmodi mit:
einer Lichtquelle (LQ);
einem photosensitiven Detektor (DET);
einem ersten Anregungspfad (AP1) zur Übertragung von Licht der Lichtquelle als Anregungslicht von oben in eine erste Messposition (MP1), in der ein Probenbehälter (PB1) mit einer Probe (P1) angeordnet oder anordenbar ist;
einem ersten Emissionspfad (EP1) zur Übertragung von durch die Probe emittiertem Emissionslicht von einer Oberseite der Probe zu dem Detektor (DET);
einer oberhalb der ersten Messposition (MP1) angeordneten selektiven Strahlumlenkeinrichtung (SU) zur Separation des ersten Anregungspfades (AP1) vom ersten Emissionspfad (EP1);
einem zweiten Anregungspfad (AP2) zur Übertragung von Licht der Lichtquelle als Anregungslicht von unten in eine zweite Messposition (MP2), in der ein Probenbehälter (PB2) mit einer Probe (P2) angeordnet oder anordenbar ist;
einem zweiten Emissionspfad (EP2) zur Übertragung von durch die Probe emittiertem Emissionslicht von einer Unterseite der Probe zu dem Detektor (DET);
Einrichtungen zur Umschaltung zwischen einem ersten Betriebsmodus und einem zweiten Betriebsmodus, wobei im ersten Betriebsmodus der erste Anregungspfad (AP1) und der erste Emissionspfad (EP1) und im zweiten Betriebsmodus der zweite Anregungspfad (AP2) und der zweite Emissionspfad (EP2) nutzbar sind, wobei
der zweite Emissionspfad (EP2) einen ersten Teilpfad (TP1) aufweist, der von einem unterhalb der zweiten Messposition (MP2) angeordneten, zur Vorrichtung gehörenden Eintrittskopf (EK) für von der Unterseite der Probe emittiertes Emissionslicht unter Umgehung der ersten Messposition (MP1) zu einer zur Vorrichtung gehörenden Einkoppeleinrichtung zur Einkopplung von Emissionslicht in den ersten Emissionspfad führt,
**gekennzeichnet durch**
eine zwischen mehreren Betriebsstellungen umschaltbare Emissionsfilterträgereinrichtung (ET) zur selektiven Filterung von Emissionslicht vor Eintritt in den Detektor (DET), wobei die Emissionsfilterträgereinrichtung als umschaltbare Einkoppeleinrichtung zur wahlweise Einkopplung von Emissionslicht aus dem ersten Teilpfad (TP1) in den ersten Emissionspfad (EP1) ausgebildet ist.

2. Vorrichtung nach Anspruch 1, **dadurch gekennzeichnet, dass** die Emissionsfilterträgereinrichtung (ET) einen Einkoppelabschnitt (EA) mit einem Umlenkelement (US3, US4) zur Umlenkung von Emissionslicht aus dem ersten Teilpfad (TP1) in Richtung des Detektors (DET) aufweist, wobei die Emissionsfilterträgereinrichtung zur Einstellung des zweiten Betriebsmodus in eine Einkoppelstellung bewegbar ist, in welcher Emissionslicht aus dem ersten Teilpfad (TP1) über den Einkoppelabschnitt (EA) in Richtung des Detektors (DET) umlenkbar ist.

3. Vorrichtung nach Anspruch 2, **dadurch gekennzeichnet, dass** im Einkoppelabschnitt (EA) mindestens ein streulichtreduzierendes Element vorgesehen ist, das derart ausgelegt ist, dass kein oder nur wenig Streulicht aus dem ersten Teilpfad (TP1) zum Detektor (DET) gelangt und/oder dass im Einkoppelabschnitt (EA) mindestens ein lichtführendes Element vorgesehen ist, das derart ausgelegt ist, dass Nutzlicht aus dem ersten Teilpfad (TP1) im Wesentlichen nur über das Umlenkelement (US3, US4) zum Detektor gelangt.

4. Vorrichtung nach einem der vorhergehenden Ansprüche, **dadurch gekennzeichnet, dass** die Emissionsfilterträgereinrichtung (ET) als verstellbares Verschlusselement ausgebildet ist, das einen Lichtaustritt aus dem ersten Teilpfad (TP1) unterbindet, wenn sich die Emissionsfilterträgereinrichtung (ET) nicht in der Einkoppelstellung befindet und/oder dass die Emissionsfilterträgereinrichtung (ET) als verstellbares Verschlusselement ausgebildet ist, welches einen Durchtritt von Emissionslicht aus ersten Emissionspfad in Richtung des Detektors (DET) unterbindet, wenn sich die Emissionsfilterträgereinrichtung in der Einkoppelstellung befindet.

5. Vorrichtung nach einem der vorhergehenden Ansprüche, **dadurch gekennzeichnet, dass** die umschaltbare Emissionsfilterträgereinrichtung (ET) als linear verschiebbarer Schieber ausgebildet ist.

6. Vorrichtung nach einem der vorhergehenden Ansprüche, **dadurch gekennzeichnet, dass** der Detektor (DET) ein stationärer Detektor ist, der sich im ersten und im zweiten Betriebsmodus in derselben Detektorposition befindet.

7. Vorrichtung nach einem der vorhergehenden Ansprüche, **gekennzeichnet durch** einen weiteren photosensitiver Detektor (DET2), der an einer festen Detektorposition unterhalb der ersten Messposition (MP1) angeordnet ist.

8. Vorrichtung nach einem der vorhergehenden Ansprüche, **dadurch gekennzeichnet, dass** der Eintrittskopf (EK) ein Faserbündel mit einer Vielzahl von Lichtleitfasern mit Lichteintrittsenden aufweist, die ringförmig um eine Mittelachse des Eintrittskopfs angeordnet sind, wobei die Lichteintrittsenden gegenüber der Mittelachse derart geneigt sind, dass ein Aperturwinkel der Lichtleitfasern Emissionslicht im Wesentlichen nur aus einem emittierenden Durchmesser am Boden eines in der zweiten Messposition angeordneten Probenbehälters erfassen kann.

9. Vorrichtung nach einem der vorhergehenden Ansprüche, **dadurch gekennzeichnet, dass** der Eintrittskopf (EK) ein Faserbündel mit einer Vielzahl von Lichtleitfasern mit Lichteintrittsenden zum Einkoppeln von Licht aufweist und dass die Lichtleitfasern an einer Austrittsseite des Eintrittskopfs gruppenweise zu zwei oder mehr jeweils eine Vielzahl von Lichtleitfasern umfassenden Faserbündeln zusammengefasst sind, die optisch voneinander getrennt zur Einkoppeleinrichtung führen.

10. Vorrichtung nach einem der vorhergehenden Ansprüche, **dadurch gekennzeichnet, dass** die Vorrichtung an einem probenseitigen Ende des zweiten Anregungspfades (AP2) unterhalb der zweiten Messposition (MP2) einen Austrittskopf zum Leiten von Anregungslicht zur Unterseite eines in der zweiten Messposition angeordneten Probenbehälters aufweist, wobei in dem Austrittskopf (AK) ein Strahlteiler (ST) zur Auskopplung eines Anteils des Anregungslichts zu einem dem Austrittskopf zugeordneten Referenzdetektor (RD) angeordnet ist.

11. Vorrichtung nach einem der vorhergehenden Ansprüche, **gekennzeichnet durch** eine umschaltbare Weicheneinrichtung (WE), die zwischen der Lichtquelle (LQ) und der Strahlumlenkeinrichtung (SU) angeordnet ist und zwischen mindestens zwei Betriebsstellungen umschaltbar ist, wobei in einer ersten Betriebsstellung Anregungslicht von der Lichtquelle (LQ) entlang des ersten Anregungspfades (AP1) zur Strahlumlenkeinrichtung (SU) geleitet und in einer zweiten Betriebsstellung Anregungslicht in den zweiten Anregungspfad (AP2) eingekoppelt wird.

12. Vorrichtung nach einem der vorhergehenden Ansprüche, **dadurch gekennzeichnet, dass** die Vorrichtung nur eine Lichtquelle (LQ) für den ersten und den zweiten Betriebsmodus aufweist, wobei die Lichtquelle vorzugsweise stationär angeordnet ist.

## Claims

1. Device for determining the optical properties of samples in different operating modes, comprising:
a light source (LQ);
a photosensitive detector (DET);
a first excitation path (AP1) for transmission of light from the light source as an excitation light from above into a first measurement position (MP1) in which a sample container (PB1) including a sample (P1) is arranged or arrangeable;
a first emission path (EP1) for transmission of emission light emitted by the sample from a top side of the sample to the detector (DET);
a selective beam deflector device (SU) arranged above the first measurement position (MP1) for separation of the first excitation path (AP1) from the first emission path (EP1);
a second excitation path (AP2) for transmission of light from the light source as an excitation light from below into a second measurement position (MP2) in which a sample container (PB2) including a sample (P2) is arranged or arrangeable;
a second emission path (EP2) for transmission of emission light emitted by the sample from a bottom side of the sample to the detector (DET);
devices for switching over between a first operating mode and a second operating mode, wherein in the first operating mode the first excitation path (AP1) and the first emission path (EP1) and in the second operating mode the second excitation path (AP2) and the second emission path (EP2) are usable, wherein
the second emission path (EP2) includes a first partial path (TP1) which leads from an input head (EK) belonging to the device and arranged below the second measurement position (MP2) for emission light emitted from the bottom side of the sample while bypassing the first measurement position (MP1) to a coupling device belonging to the device for coupling of emission light into the first emission path,
**characterized by**
an emission filter carrier device (ET) capable of being switched over between multiple operating positions for selective filtering of emission light prior to entering into the detector (DET), wherein the emission filter carrier device is configured as a coupling device capable of being switched over for optional coupling of emission light from the first partial path (TP1) into the first emission path (EP1).

2. Device according to claim 1, **characterized in that** the emission filter carrier device (ET) includes a coupling portion (EA) having a deflector element (US3, US4) for deflecting emission light from the first partial path (TP1) in the direction of the detector (DET), wherein the emission filter carrier device is movable to a coupling position for setting the second operating mode, in which position emission light from the first partial path (TP1) is deflectable via the coupling portion (EA) in the direction of the detector (DET).

3. Device according to claim 2, **characterized in that** in the coupling portion (EA) at least one scattered light reducing element is provided and configured such that no or only a minor amount of scattered light from the first partial path (TP1) comes to the detector (DET) and/or that in the coupling portion (EA) at least one light-guiding element is provided and configured such that utilized light from the first partial path (TP1) comes to the detector essentially only via the deflector element (US3, US4).

4. Device according to any of the preceding claims, **characterized in that** the emission filter carrier device (ET) is an adjustable shutter element to prevent output of light from the first partial path (TP1), when the emission filter carrier device (ET) is not in the coupling position, and/or **in that** the emission filter carrier device (ET) is an adjustable shutter element to prevent transmission of emission light from the first emission path in the direction of the detector (DET), when the emission filter carrier device is in the coupling position.

5. Device according to any of the preceding claims, **characterized in that** the emission filter carrier device (ET) capable of being switched over is a linear displaceable slider.

6. Device according to any of the preceding claims, **characterized in that** the detector (DET) is a stationary detector which in the first and in the second operating modes is situated in the same detector position.

7. Device according to any of the preceding claims, **characterized by** a further photosensitive detector (DET2) which is arranged on a fixed detector position below the first measurement position (MP1).

8. Device according to any of the preceding claims, **characterized in that** the input head (EK) includes a fibre bundle having a plurality of optical fibres with optical input ends which are arranged circularly about a central axis of the input head, wherein the optical input ends are inclined in relation to the central axis such that an aperture angle of the optical fibres can detect emission light essentially only from an emitting diameter at the bottom of a sample container disposed in the second measurement position.

9. Device according to any of the preceding claims, **characterized in that** the input head (EK) includes a fibre bundle having a plurality of optical fibres with optical input ends for coupling of light, and **in that** the optical fibres on an output side of the input head are combined in groups of two or more fibre bundles respectively comprising a plurality of optical fibres, which fibre bundles lead to the coupling device optically separated from each other.

10. Device according to any of the preceding claims, **characterized in that** the device includes, on a sample-sided end of the second excitation path (AP2) below the second measurement position (MP2), an output head for directing excitation light to the bottom side of a sample container disposed in the second measurement position, wherein in the output head (AK) is disposed a beam splitter (ST) for uncoupling a portion of the excitation light to a reference detector (RD) associated with the output head.

11. Device according to any of the preceding claims, **characterized by** a switchable separator device (WE) interposed between the light source (LQ) and the beam deflector device (SU) and capable of being switched over between at least two operating positions, wherein in a first operating position excitation light from the light source (LQ) is transmitted along the first excitation path (AP1) to the beam deflector device (SU) and in a second operating position excitation light is coupled into the second excitation path (AP2).

12. Device according to any of the preceding claims, **characterized in that** the device includes only one light source (LQ) for the first and the second operating modes, wherein the light source preferably is stationary.

## Revendications

1. Arrangement pour déterminer des propriétés optiques d'échantillons dans différents modes de fonctionnement, comprenant :
une source de lumière (LQ) ;
un détecteur photosensible (DET) ;
un premier trajet d'excitation (AP1) servant à la transmission de la lumière de la source de lumière en tant que lumière d'excitation depuis le dessus dans une première position de mesure (MP1), dans laquelle est disposé ou peut être disposé un récipient à échantillon (PB1) comprenant un échantillon (P1) ;
un premier trajet d'émission (EP1) servant à la transmission de la lumière d'émission émise par l'échantillon depuis un côté supérieur de l'échantillon vers le détecteur (DET) ;
un dispositif de déviation de rayon (SU) sélectif, disposé au-dessus de la première position de mesure (MP1) et destiné à séparer le premier trajet d'excitation (AP1) du premier trajet d'émission (EP1) ;
un deuxième trajet d'excitation (AP2) servant à la transmission de la lumière de la source de lumière en tant que lumière d'excitation depuis le dessous dans une deuxième position de mesure (MP2), dans laquelle est disposé ou peut être disposé un récipient à échantillon (PB2) comprenant un échantillon (P2) ;
un deuxième trajet d'émission (EP2) servant à la transmission de la lumière d'émission émise par l'échantillon depuis un côté inférieur de l'échantillon vers le détecteur (DET) ;
des dispositifs de permutation entre un premier mode de fonctionnement et un deuxième mode de fonctionnement, le premier trajet d'excitation (AP1) et le premier trajet d'émission (EP1) pouvant être utilisés dans le premier mode de fonctionnement et le deuxième trajet d'excitation (AP2) et le deuxième trajet d'émission (EP2) pouvant être utilisés dans le deuxième mode de fonctionnement,
le deuxième trajet d'émission (EP2) possédant un premier trajet partiel (TP1) qui mène d'une tête d'entrée (EK) pour la lumière d'émission émise depuis le côté inférieur de l'échantillon, disposée au-dessous de la deuxième position de mesure (MP2) et faisant partie de l'arrangement, jusqu'à un dispositif d'injection faisant partie de l'arrangement et servant à l'injection de la lumière d'émission dans le premier trajet d'émission, en contournant la première position de mesure (MP1) ;
**caractérisé par**
un dispositif porteur de filtre d'émission (ET) permutable entre plusieurs positions de fonctionnement, servant au filtrage sélectif de la lumière d'émission avant l'entrée dans le détecteur (DET), le dispositif porteur de filtre d'émission étant réalisé sous la forme d'un dispositif d'injection permutable destiné à l'injection sélective de lumière d'émission issue du premier trajet partiel (TP1) dans le premier trajet d'émission (EP1).

2. Arrangement selon la revendication 1, **caractérisé en ce que** le dispositif porteur de filtre d'émission (ET) possède une portion d'injection (EA) comportant un élément de déviation (US3, US4) destiné à dévier la lumière d'émission issue du premier trajet partiel (TP1) en direction du détecteur (DET), le dispositif porteur de filtre d'émission, en vue de régler le deuxième mode de fonctionnement, pouvant être déplacé dans une position d'injection dans laquelle de la lumière d'émission issue du premier trajet partiel (TP1) peut être déviée en direction du détecteur (DET) par le biais de la portion d'injection (EA).

3. Arrangement selon la revendication 2, **caractérisé en ce qu'**au moins un élément de réduction de la lumière diffusée est disposé dans la portion d'injection (EA), lequel est configuré de telle sorte qu'aucune ou seulement très peu de lumière diffusée issue du premier trajet partiel (TP1) parvient jusqu'au détecteur (DET) et/ou **en ce qu'**au moins un élément de guidage de lumière est disposé dans la portion d'injection (EA), lequel est conçu de telle sorte que de la lumière utile issue du premier trajet partiel (TP1) parvient jusqu'au détecteur sensiblement seulement par le biais de l'élément de déviation (US3, US4).

4. Arrangement selon l'une des revendications précédentes, **caractérisé en ce que** le dispositif porteur de filtre d'émission (ET) est réalisé sous la forme d'un élément de fermeture positionnable, lequel inhibe une sortie de lumière depuis le premier trajet partiel (TP1) lorsque le dispositif porteur de filtre d'émission (ET) ne se trouve pas dans la position d'injection et/ou **en ce que** le dispositif porteur de filtre d'émission (ET) est réalisé sous la forme d'un élément de fermeture positionnable, lequel inhibe un passage de la lumière d'émission issue du premier trajet d'émission en direction du détecteur (DET) lorsque le dispositif porteur de filtre d'émission se trouve dans la position d'injection.

5. Arrangement selon l'une des revendications précédentes, **caractérisé en ce que** le dispositif porteur de filtre d'émission (ET) permutable est réalisé sous la forme d'un curseur pouvant coulisser linéairement.

6. Arrangement selon l'une des revendications précédentes, **caractérisé en ce que** le détecteur (DET) est un détecteur fixe qui se trouve dans la même position de détecteur dans le premier et dans le deuxième mode de fonctionnement.

7. Arrangement selon l'une des revendications précédentes, **caractérisé par** un détecteur photosensible supplémentaire (DET2) qui est disposé à une position de détecteur fixe au-dessous de la première position de mesure (MP1).

8. Arrangement selon l'une des revendications précédentes, **caractérisé en ce que** la tête d'entrée (EK) possède un faisceau de fibres comprenant une pluralité de fibres optiques dotées d'extrémités d'entrée de lumière, lesquelles sont disposées en forme d'anneau autour d'un axe central de la tête d'entrée, les extrémités d'entrée de lumière étant inclinées par rapport à l'axe central de telle sorte qu'un angle d'ouverture des fibres optiques ne peut détecter de la lumière d'émission sensiblement seulement en provenance d'un diamètre émetteur au niveau du fond d'un récipient à échantillon disposé dans la deuxième position de mesure.

9. Arrangement selon l'une des revendications précédentes, **caractérisé en ce que** la tête d'entrée (EK) possède un faisceau de fibres comprenant une pluralité de fibres optiques dotées d'extrémités d'entrée de lumière servant à l'injection de lumière, et **en ce que** les fibres optiques sont assemblées en groupes au niveau d'un côté de sortie de la tête d'entrée en deux ou plus faisceaux de fibres comportant respectivement une pluralité de fibres optiques, lesquels mènent au dispositif d'injection en étant séparés optiquement les uns des autres.

10. Arrangement selon l'une des revendications précédentes, **caractérisé en ce que** l'arrangement possède, au niveau d'une extrémité côté échantillon du deuxième trajet d'excitation (AP2), au-dessous de la deuxième position de mesure (MP2), une tête de sortie destinée à acheminer de la lumière d'excitation vers le côté inférieur d'un récipient à échantillon disposé dans la deuxième position de mesure, un séparateur de rayons (ST) destiné à découpler une partie de la lumière d'excitation vers un détecteur de référence (RD) associé à la tête de sortie étant disposé dans la tête de sortie (AK).

11. Arrangement selon l'une des revendications précédentes, **caractérisé par** un dispositif d'aiguillage (WE) permutable qui est disposé entre la source de lumière (LQ) et le dispositif de déviation de rayon (SU) et qui peut être permuté entre au moins deux positions de fonctionnement, dans une première position de fonctionnement, de la lumière d'excitation étant acheminée de la source de lumière (LQ) vers le dispositif de déviation de rayon (SU) le long du premier trajet d'excitation (AP1) et dans une deuxième position de fonctionnement, la lumière d'excitation étant injectée dans le deuxième trajet d'excitation (AP2).

12. Arrangement selon l'une des revendications précédentes, **caractérisé en ce que** l'arrangement possède une seule source de lumière (LQ) pour le premier et le deuxième mode de fonctionnement, la source de lumière étant de préférence disposée en position fixe.
